# EUROPEAN PATENT SPECIFICATION

(11) **EP 0 930 986 B1**
(45) Date of publication and mention of the grant of the patent: **28.01.2004**
(21) Application number: 97911723.1
(22) Date of filing: 20.10.1997
(51) Int. Cl.: B60R 21/16, D03D 1/02

(54) **FABRIC WITH BALANCED MODULUS AND UNBALANCED CONSTRUCTION**
GEWEBE MIT AUSGEGLICHENEM ELASTIZITÄTSMODUL UND UNSYMMETRISCHER STRUKTUR
TISSU A MODULE D'ELASTICITE EQUILIBRE ET A CONTEXTURE NON EQUILIBREE

(30) Priority: 21.10.1996 US 28896 P
(43) Date of publication of application: 28.07.1999
(73) Proprietor: SANDIA CORPORATION, Albuquerque, New Mexico 87185-5800 (US)
(72) Inventor: GWINN, Kenneth, W., Cedar Crest, NM 87008 (US); HOLDER, Joseph, P., Greensboro, NC 27407 (US)
(74) Representative: Grünecker, Kinkeldey, Stockmair & Schwanhäusser Anwaltssozietät
(86) International application number: PCT/US1997/018567
(87) International publication number: WO 1998/017505

(56) References cited:
- EP-A- 0 018 335
- EP-A- 0 314 867
- EP-A- 0 416 483
- EP-A- 0 558 762
- EP-A- 0 682 136
- WO-A-95/00366
- DE-A- 19 611 737
- US-A- 5 073 418

## Description

### Technical Field

The present invention relates to a fabric with a balanced. nearly balanced, or optimal modulus of elasticity ("modulus") and unbalanced construction for use in various fabric structures. Specifically, the invention relates to a fabric with balanced modulus and unbalanced construction for an airbag or similar fabric structure.

### Background Art

A fabric structure and a method according to the preambles of claim 1 and 13 respectively are known from US-A-5 482 317.

Fabric structures such as air bags are generally made from fabric containing a balanced woven fabric construction. Balanced woven fabric construction is obtained when the yams in the two woven construction directions -- that is, warp and fill -- are made from the same denier material and contain the same count of yams of equal size, strength and spacing. (The fill direction is also sometimes referred to as "weft"). These identical yarns are woven together to form a balanced weave fabric. This generally balanced construction also fortuitously results in a balanced modulus of elasticity in the warp and fill direction. Modulus of elasticity, in this usage, is the quotient of stress induced in a material divided by the strain resulting from that stress.

The problem presented by prior art fabric structures is that they do not obtain balanced mechanical properties that optimize fabric mass, volume, load carrying ability, and manufacturing cost or reduce the randomness of strength for a fabric structure or flexible pressure vessel.

### Disclosure of the Invention

The object of the invention is a fabric structure or flexible pressure vessel of unbalanced weave fabric with balanced mechanical properties to optimize the fabric mass, volume, load carrying ability, and manufacturing cost and reduce the randomness of its strength.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

To achieve the objects and in accordance with the purpose of the invention, as embodied and broadly described herein, the invention comprises a fabric made from dissimilar yarns, one in warp and one in fill. The invention also comprises a fabric made from yarn stretched to balance the modulus of elasticity. This invention also comprises a fabric wherein the spaces between yarns or the weave of the yarns are adjusted to achieve a preferred modulus of elasticity that is approximately balanced. This invention also includes a method of manufacturing a fabric with balanced modulus and unbalanced construction.

It is to be understood that both the foregoing general description and the following detailed description are exemplary and explanatory only and are not restrictive of the invention, as claimed.

### Brief Description of the Drawings

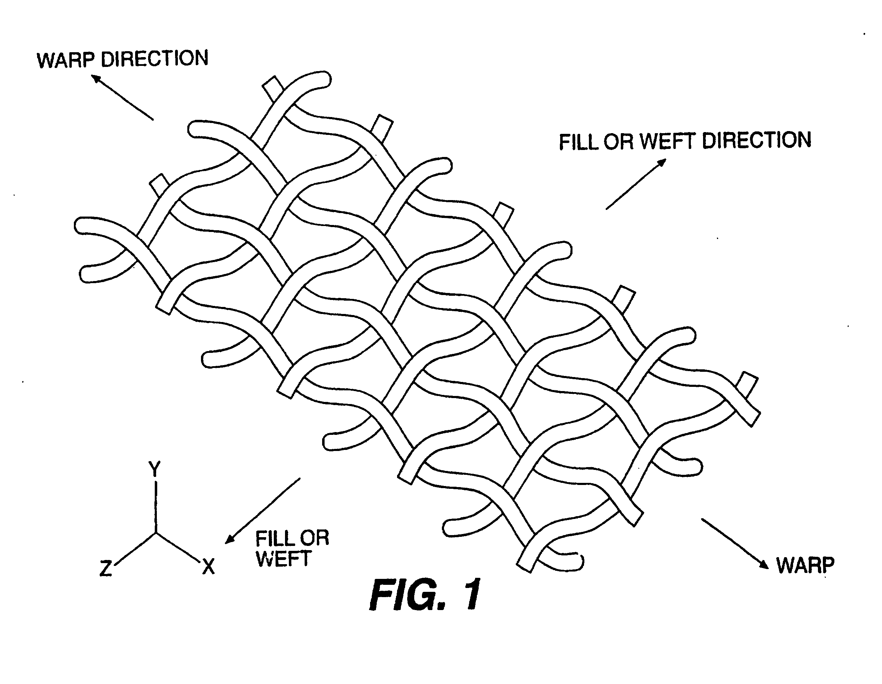

Fig. 1 depicts weave of fabric in the warp and fill directions.
Fig. 2 depicts an edge view of a plain weave fabric.
Fig. 3 depicts a top view of a plain weave fabric.
Fig. 4 depicts a side view of a plain weave fabric.
Fig. 5 depicts an edge view of a 2 x 1 twill weave fabric.
Fig. 6 depicts a top view of a twill weave fabric.
Fig. 7 depicts a side view of a twill weave fabric.

### Best Mode for Carrying Out the Invention

As disclosed herein, the fabric with near balanced or optimized modulus and unbalanced construction (unbalanced weave) concept evolved from the inventors' discovery that an unbalanced woven fabric construction experienced unequal stretching in the warp and fill directions during the fabric structure deployment. This unequal stretching produces a skewed or sheared shape and a susceptibility to tear the fabric at relatively stiff portions in the structure such as seams, mounting areas and stitching. This tearing produces premature failure in the structure, thereby reducing the efficiency of the fabric. A higher fabric strength and weight was therefore required for the given fabric structure to avoid premature failure. This increased strength and weight decreased the efficiency of the fabric structure for a given mass or volume.

Additionally, the thickness of a balanced construction fabric is determined by the geometrical combination of the same yams in both the warp and fill directions. In contrast, in accordance with the present invention, the thickness of an unbalanced construction fabric is determined by the optimum geometrical combination of different numbers and sizes of yarns in the warp and fill directions. The inventors discovered that for every combination of yarns in a balanced construction, a thinner combination of yarns to achieve the same strength or a stronger combination of yarn to achieve the same thickness is possible in an unbalanced construction.

The inventors conducted a series of structural tests that demonstrated their ability to achieve greater strength from the same fabric mass or volume by varying the construction of the fabric, weaving dissimilar yarns in the warp and fill directions, or alternating the weave of the fabric. These unbalanced woven fabrics produced balanced or nearly balanced structural properties in the loaded or end-use condition. These unbalanced woven fabrics, therefore, were able to optimize the strength, fiber mass and volume of the fabric structures. These unbalanced woven fabrics could also achieve lower permeability from the greater packing density potential of the unequal yarns. Essentially, the fibers in the resulting unbalanced woven fabric are packed more efficiently in the same volume than a conventional balanced construction fabric.

Additionally, the unbalanced woven fabric of the present invention, including an unequal number of machine direction and cross direction (warp and fill) fibers costs less to manufacture than a balanced construction fabric that produces the same volume of fabric. The number of fibers in the cross direction determines the amount of machine time required to produce a unit of fabric. Thus, fewer picks made of large fibers result in balanced fabric properties in the end use condition at a reduced cost.

Alternatively, the inventors discovered that changing the curvature of the yams in the matrix of the weave would contribute to the strength of the fabric. The inventors determined that they could balance the curvature of yams by doubling the warp or lengthening the alternations between yarns. The inventors conducted a series of structural tests that demonstrated that balancing the mechanical properties of the fabric was also a function of yarn curvature and that they could reduce the deviations in resultant fabric strength by altering the fabric weave type.

The concept of unbalanced weave fabrics with balanced mechanical properties emerges to present a geometry which optimizes the fabric mass, volume, load carrying ability, and manufacturing cost and reduces the randomness of strength for a fabric structure or flexible pressure vessel.

Reference will now be made in detail to the present preferred embodiments of the invention.

This invention relates to a fabric structure made from dissimilar or altered yams in the warp and fill directions; a fabric structure made from varied amounts of yarns in the warp and fill directions: or a fabric made by altering the weave of the fabric to obtain a fabric with mechanical properties approximately balanced.

The design of the unbalanced woven fabric of the present invention is accomplished by altering the construction of the yarns such that the mechanical properties of the final product, the fabric, are approximately balanced for the end-use conditions of the fabric. Altered construction is required because the uneven yarn size and spacing produces uneven stiffness, resulting from uneven lengths and strengths of yarn in the matrix of the fabric. This uneven yarn skews the amount of warp and fill stretch available under load, thereby skewing the modulus of elasticity. The yarns are altered, for example, by permanently stretching them by varied amounts during production to adjust the final strength and elongation of the yarns used in the finished fabric. Altering these yarns by stretching is one method of adjusting, or designing, the final modulus of elasticity of the fabric. Changing the level of stress carried by the fabric--that is, changing the capacity of the fabric--by, for example, altering the yarn spacing, can also be used to adjust the modulus of elasticity. Altering the weave of the fabric is another method or manner for balancing the fabric modulus, increasing strength and reducing the randomness of strength. It is the combination of these adjustments to mechanical characteristics which determines the final modulus of the fabric.

Therefore, balancing the modulus of elasticity of the fabric is achieved in three ways: first, by altering the strength of the fabric, that is, increasing or decreasing the number of yams in a particular direction of the fabric; and second, and alternatively, by changing the strain during stretch of the fabric by controlling the permanent strain of the individual yarn and altering the amount of stretch of the yarn during manufacture, and thus leaving a controllable amount of stretch in the constructed fabric; and third, and alternatively by alternating the weaves of the fabric and thus reducing the curvature of the yarns through the fabric and matching the curvature of the warp and fill yarns, thus balancing the fabric modulus, increasing strength, and reducing the randomness of strength.

The selection of the specific yarns to be used in the two directions must consider the fabric performance in both directions, the generation of interstitial shear stresses and the fiber properties in end use conditions. The density of the yarns and woven fabric is defined by the given volume and performance requirements.

Once the fabric is woven with these specially selected and altered yams, testing is used to prove that the modulus is balanced. It is necessary to test the fabric in the "as used" condition to match the modulus of elasticity between the fabric construction directions. This testing usually includes exposure to relevant environments, such as combinations of temperature and loading rates. Slow or static rates of loading require static testing of the material. Dynamic loading of the fabric structure requires that similar strain-rates are induced in the test fabric to insure that the moduli are balanced for these conditions. The theoretical performance characteristics of the fabric, as defined by the yarn properties and density of the woven fabric are compared to the actual characteristics achieved in testing. Modification of yarn selection or weaving is then made until the actual performance characteristics of the fabric meet the required performance in the end-use conditions.

Theoretical fabric characteristics are defined based upon various procedures, such as, for example, finite element model analysis.

Testing of the fabric to measure actual fabric characteristics requires putting the fabric under end-use conditions and measuring its mechanical properties in two directions, warp and fill. For example, a high speed tensile test and high strain rate testing can be performed in each direction. The tests are designed to identify the differences in the performance of the fabric in each direction. Then, by an iterative method, the fabric is redesigned so as to reach a final design where the performance of the fabric in each direction under end-use conditions is approximately the same.

This invention disclosed allows the use of lighter weight fabrics in fabric structures such as airbags, parachutes, and balloons. The resulting fabric produced in accordance with this invention should approximately balance the mechanical properties of the fabric in two directions. This fabric can thus be made stronger without requiring stronger fibers or weight or volume. By adjusting, through iterative comparison testing, the use of dissimilar yarns in dissimilar quantities in the warp and fill direction of the fabric and by minimizing the shear stresses between the warp and fill directions in the fabric from dissimilar mechanical performance an optimal balanced modulus fabric is attained. For a given strength or performance requirement, a lighter fabric requiring less volume can be used to achieve the desired result. For a set fabric weight or volume parameter, greater strength can be achieved by utilization of the present invention.

Alternatively, the invention discloses the use of alternative weaves to achieve approximately balanced mechanical properties for fabric structures. Balanced mechanical properties for the fabric structure are achieved, for example, by adjusting the weave of the fabric to approach a balance in the curvature of the yarns in each direction. This can be achieved, for example, by doubling the number of yarns in a particular direction or by lengthening the alternations between yarns, or a combination of both techniques. By altering the weave in this manner, the curvature of the yam becomes essentially the same, that is -- balanced-- in the over and under direction for each yarn. Picturing the shape of the weave in two directions as essentially a rectangle, the closer that rectangle comes to a square geometry the more balanced the curvature of the yam and the resulting mechanical properties of the fabric.

Lengthening the yarn to achieve near balanced conditions by altering the weave refers to increasing the path length of the yarn through the matrix of the fabric in its length direction. Crimp is the amount of kinking through the fabric. By reducing the path length of the yarn the crimp or amount of kinking is reduced, reducing the curvature of the yarn through the fabric matrix. The crimp or curvature of the yarns in the fabric can be measured by comparing a length of yarn contained in a length of fabric. The additional length of the yarn required to traverse the circuitous path through the fabric matrix is a direct measure of crimp -- the greater the percentage length, the greater the crimp; the smaller the percentage length, the straighter the yams and the smaller the crimp in the yarn. By balancing the path length for the yarns in two directions the curvature and crimp of dissimilar yarn is made to act in a more similar or balanced manner.

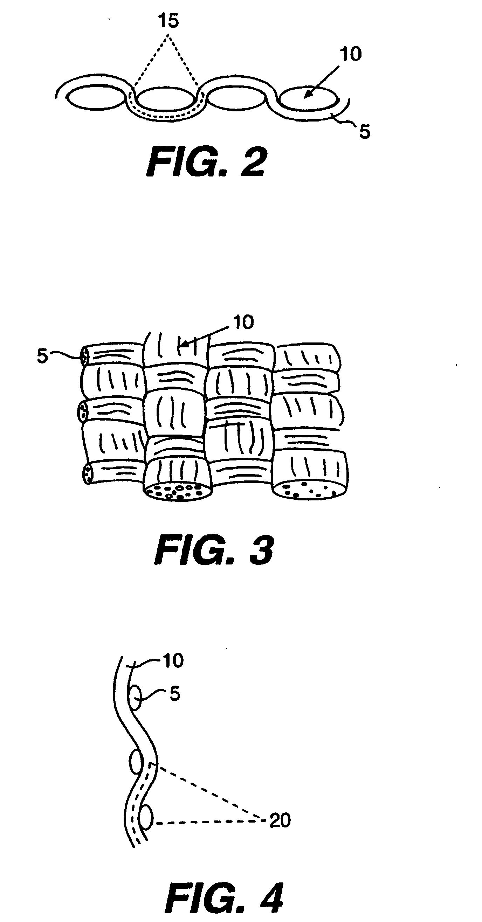

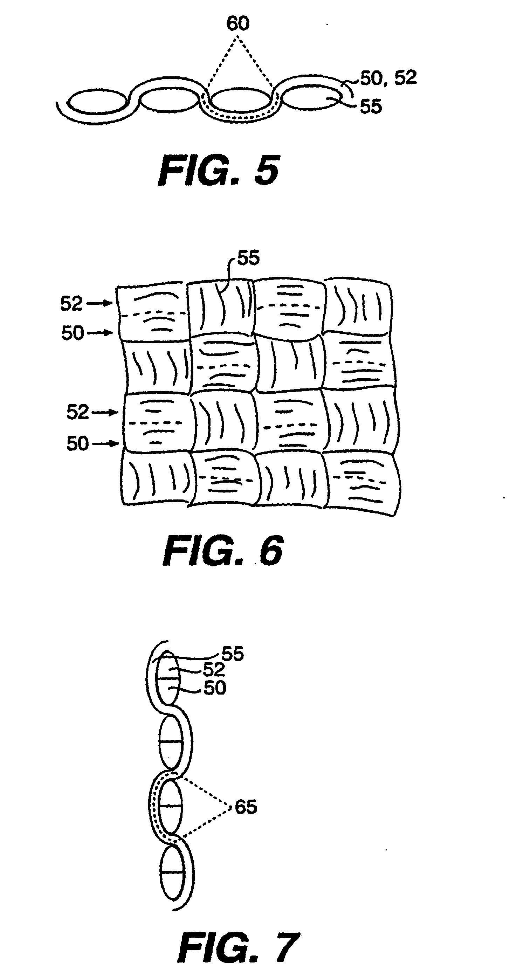

An example of one of the embodiments of the invention is illustrated in Figs. 5, 6, and 7. In comparison to the prior art plain weave depicted in Figs. 2, 3, and 4, an embodiment of the present invention is depicted in Figs. 5, 6, and 7 which employs a 2 x 1 twill weave. The plain weave of Figs. 2, 3. and 4 has an effective radius of curvature 15 of the warp yam 5 what is dissimilar to, and in these figures smaller than, the effective radius of curvature 20 of the fill yarn 10. In contrast, the embodiment of the present invention depicted in Figs. 5, 6, and 7 has an effective radius of curvature 60 of the warp yarns 50, 52 that is more similar and preferably approaching an identical radius of curvature 65 of the fill yarn 55. In the example of Figs. 5, 6, and 7 the number of yarns in the warp direction is doubled in comparison to the prior art plain weave depicted in Figs. 2, 3, and 4. Additionally, in the example 2 x 1 twill weave of Figs. 5, 6, and 7, the crimp and curvature in both yam directions is balanced to a greater degree than in the plain weave of Figs. 2, 3, and 4, producing a fabric structure with a near balanced modulus.

The invention will be further clarified by the following examples, which are intended to be purely exemplary of the invention.

### EXAMPLES

Test data from the following three versions of fabrics demonstrates the invention of obtaining additional strength from a constant mass of fabric by balancing the mechanical properties of the fabric in two directions with an unbalanced construction. Table 1 provides the relevant data for these three fabrics.

### Version I

This fabric was designed with conventional guidelines. 45 denier warp yarn and 100 denier fill yarn were used. The yam properties were selected to maximize the ultimate tensile strength of each direction.

### Version II

This fabric was designed to increase the strength of version I. The amount of yarn in one direction was increased. Although static testing indicated increased strength was achieved, dynamic testing at end-use conditions and 85°C indicated that the fabric was actually weaker and that the fabric performance was much lower.

### Version III

This fabric design used the unbalanced woven construction with the balanced modulus design concept. The slope of the stress strain curve for both of the warp and fill yarns was made approximately parallel. For example, the modulus ratio, dividing the warp direction modulus value by the fill direction modulus value was about .89 (or 89%) in the hot 85°C condition. The result was that about a 50% increase in the dynamic tensile strength was seen, achieving more strength out of the same mass of fabric from the previous test versions and conventional designs.

**Table 1**

| | DENIER | YARN ELONGATION | NUMBER | STATIC TENSILE | DYNAMIC TENSILE | DYNAMIC TENSILE(HOT) |
|---|---|---|---|---|---|---|
| VERSION I | | | | | | |
| WARP | 45 | 20% | 183 | 281 | 229 | 204 |
| FILL | 100 | 31% | 93 | 321 | 260 | 210 |
| VERSION II | | | | | | |
| WARP | 40 | 31% | 242 | 309 | 228 | 199 |
| FILL | 100 | 32% | 92 | 349 | 255 | 220 |
| VERSION III | | | | | | |
| WARP | 45 | 24% | 249 | 356 | 334 | 302 |
| FILL | 100 | 24% | 97 | 337 | 287 | 256 |

Test data demonstrating the invention of balancing the modulus ratio through controlling the strain of the yarn during production is demonstrated in the following four fabrics listed in Table 2 below. The first fabric used conventionally produced yarns, and achieved a modulus ration of 62% and 53% at ambient and hot test temperatures. The second through fourth fabrics varied combinations of warp and fill yarn properties in accordance with the present invention to affect the modulus. As is demonstrated by the results of the fourth fabric, the modulus ratio between the warp and fill is improved by adjusting the yarn properties. Here, by practicing the present invention, a greater modulus balance at both the ambient and hot conditions is achieved, measuring 80% and 82%, respectively.

**Table 2:**

| **Modulus Control Through Yarn Production Properties - Lightweight Yarns** | | | | | |
|---|---|---|---|---|---|
| Fabric Yarns | Yarn Strain at Production | | Process Information | Modulus Ratio (100% Ideal) | |
| warp/fill | warp | fill | | Ambient | Hot |
| 1. 45/100 | 28% | 21% | baseline yarns | 62% | 53% |
| 2. 45/100 | 28% | 24% | vary fill yarns only | 67% | 72% |
| 3. 45/100 | 24% | 24% | vary warp&fill yarns | 65% | 89% |
| 4. 45/100 | 24% | 24% | vary warp&fill yarns and process draw | 80% | 82% |

A similar fabric trial applying the present invention to the use of two slightly heavier denier fabrics for high temperature use was also completed. Table 3 lists the results for a 55 denier warp and a 120 denier fill fabric. With this trial, a balancing of the fabric moduli at the hot temperature was achieved in the second test by varying the fill yarns. Fabric properties at hot temperatures frequently limits the use of the fabric, and the ability to balance the moduli at high temperatures as demonstrated in this test by practicing the present invention is highly useful and important.

**Table 3:**

| **Modulus Control Through Yarn Production Properties - Heavier Denier Yarns** | | | | | |
|---|---|---|---|---|---|
| Fabric Yarns | Yarn Strain at Production | | Process Information | Modulus Ratio (100% Ideal) | |
| warp/fill | warp | fill | | Ambient | Hot |
| 1. 55/120 | 25% | 24% | baseline yarns | 79% | 69% |
| 2. 55/120 | 25% | 28.2% | vary fill yarns only | 66% | 92% |

Test data from the following four fabric types demonstrating the invention of obtaining balanced mechanical properties and modulus control with alternate weaves of yarns. The three fabrics chosen were a 2x1 oxford, a 2x2 basket, and a 2x1 twill. For comparison purposes, a plain weave was also woven. A 40 denier warp by 100 denier fill was used for the trial. These fabrics were all tested in a high strain-rate machine at Sandia Labs, Livermore, California. The tests were all completed at ambient temperature. The summary of test results is shown in Table 4. The strongest warp direction was displayed by the 2x1 twill, which was also the strongest fill direction. As demonstrated by comparison, the initial .70 modulus ratio for the plain weave fabric improved to 1.07 and .97 respectively for the 2x1 oxford and 2x1 twill weaves, practically achieving the optimal desired balanced ratio of 100%. This result was achieved by a balancing that is purely a function of yarn curvature. Additionally, the scatter of strength data was reduced in the alternative weaves, in comparison to the plain weave. For these tests the 2x1 oxford and 2x 1 twill appear the most balanced.

**Table 4:**

| **Alternate Weave Trial High Strain-Rate Results** | | | | |
|---|---|---|---|---|
| FABRIC TYPE | STRENGTH (lbs/in) | STRAIN (% at break) | MODULUS (lb/in) | MODULUS RATIO (Ewarp/Efill) |
| 64345 Plain Weave | | | | 0.70 |
| warp | 89 | 37 | 239 | |
| fill | 100 | 29 | 343 | |
| 64346 2x1 Oxford Weave | | | | 1.07 |
| warp | 94 | 35 | 267 | |
| fill | 93 | 37 | 250 | |
| 64347 2x2 Basket Weave | | | | 1.22 |
| warp | 93 | 29 | 321 | |
| fill | 87 | 33 | 264 | |
| 64348 2x1 Twill Weave | | | | 0.97 |
| warp | 96 | 29 | 329 | |
| fill | 109 | 32 | 339 | |

It will be apparent to those skilled in the art that various modifications and variations can be made in the fabric structure of the present invention and in construction of this fabric without departing from the scope or spirit of the invention.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A fabric structure comprising:
a fabric having approximately a balanced modulus of elasticity in its end-use condition, including yarns woven in two directions, one direction being warp (50,52) and one direction being fill (55), having yarns greater in number in one direction than the other,
**characterised in that**
at least the yarn in one direction is stretched in an altered amount to adjust the modulus of elasticity of the fabric.

2. The fabric structure of claim 1 wherein
the fabric includes two dissimilar yarns, each woven in one of the two directions.

3. The fabric structure of claim 2, wherein the yarns are woven in a twill weave.

4. The fabric structure of claim 3, wherein the yarns are woven with two yarns in one direction and one yarn in the other direction.

5. The fabric structure of claim 1, wherein the yarns are woven in a twill weave.

6. The fabric structure of claim 5, wherein the yarns are woven with two yarns in one direction and one yarn in the other direction.

7. The fabric structure of claim 2, wherein the yarns are woven in an oxford weave.

8. The fabric structure of claim 7, wherein the yarns are woven with two yarns in one direction and one yarn in the other direction.

9. The fabric structure of daim 7, wherein the yarns are woven in an oxford weave.

10. The fabric structure of claim 9, wherein the yarns are woven with two yarns in one direction and one yarn in the other direction.

11. The fabric structure of claim 2, wherein the yarns are woven in a basket weave.

12. The fabric structure of claim 1, wherein the yarns are woven in a basket weave.

13. A method of manufacturing a fabric wherein dissimilar yarns in two directions, one direction being warp (50, 52) and one direction being fill (55) are woven together to balance the modulus of elasticity of the fabric in the warp and fill direction under end-use conditions,
wherein the yarns in the weave have a curvature (60, 65), **characterized in that** the method includes adjusting the curvature (60, 65) of the yarns by weaving more yams in one direction than the other to achieve an approximately balanced modulus of elasticity.

14. The method of claim 13, wherein the method includes stretching at least one of the yarns before weaving them together to balance the modulus of elasticity of the fabric in the warp and fill direction under end-use conditions.

15. The method of claim 13, wherein the fabric comprises yarns in two directions and the yarns have a plurality of spaces between them, wherein the method includes adjusting the spaces between the yarns to achieve an approximately balanced modulus of elasticity.

16. The method of claim 13, wherein the yarns have a path length and the method includes adjusting the curvature of yarns by varying the path length of the yarn.

## Patentansprüche

1. Gewebestruktur, die umfasst:
ein Gewebe, das in seinem Endeinsatzzustand annähernd einen ausgeglichenen Elastizitätsmodul hat und Garne enthält, die in zwei Richtungen verwebt sind, wobei eine Richtung Kette (50, 52) ist und eine Richtung Schuss (55) ist, und das eine größere Anzahl von Garnen in einer Richtung hat als in der anderen,
**dadurch gekennzeichnet, dass**:
wenigstens das Garn in einer Richtung in einem geänderten Maß gedehnt ist, um den Elastizitätsmodul des Gewebes zu regulieren.

2. Gewebestruktur nach Anspruch 1, wobei:
das Gewebe zwei unterschiedliche Garne enthält, die jeweils in einer der zwei Richtungen verwebt sind.

3. Gewebestruktur nach Anspruch 2, wobei die Game in einer Köperbindung verwebt sind.

4. Gewebestruktur nach Anspruch 3, wobei die Garne mit zwei Garnen in einer Richtung und einem Garn in der anderen Richtung verwebt sind.

5. Gewebestruktur nach Anspruch 1, wobei die Game in einer Köperbindung verwebt sind.

6. Gewebestruktur nach Anspruch 5, wobei die Game mit zwei Garnen in einer Richtung und einem Garn in der anderen Richtung verwebt sind.

7. Gewebestruktur nach Anspruch 2, wobei die Garne in einer Oxfordbindung verwebt sind.

8. Gewebestruktur nach Anspruch 7, wobei die Garne mit zwei Garnen in einer Richtung und einem Garn in der anderen Richtung verwebt sind.

9. Gewebestruktur nach Anspruch 7, wobei die Game in einer Oxfordbindung verwebt sind.

10. Gewebestruktur nach Anspruch 9, wobei die Game mit zwei Garnen in einer Richtung und einem Garn in der anderen Richtung verwebt sind.

11. Gewebestruktur nach Anspruch 2, wobei die Game in einer Würfelbindung verwebt sind.

12. Gewebestruktur nach Anspruch 1, wobei die Garne in einer Würfelbindung verwebt sind.

13. Verfahren zum Herstellen eines Gewebes, bei dem verschiedene Garne in zwei Richtungen, wobei eine Richtung Kette (50, 52) und eine Richtung Schuss (55) ist, miteinander verwebt sind, um den Elastizitätsmodul des Gewebes unter Endeinsatzbedingungen in der Kett- und der Schussrichtung auszugleichen,
wobei die Garne in der Bindung eine Krümmung (60, 65) haben, **dadurch gekennzeichnet, dass**:
das Verfahren das Regulieren der Krümmung (60, 65) der Game durch Verweben von mehr Garnen in einer Richtung als in der anderen Richtung einschließt, um einen annähernd ausgeglichenen Elastizitätsmodul zu erreichen.

14. Verfahren nach Anspruch 13, wobei das Verfahren das Dehnen wenigstens eines der Garne einschließt, bevor sie miteinander verwebt werden, um den Elastizitätsmodul des Gewebes unter Endverbrauchsbedingungen in der Kett- und der Schussrichtung auszugleichen.

15. Verfahren nach Anspruch 13, wobei das Gewebe Game in zwei Richtungen umfasst, und die Garne eine Vielzahl von Zwischenräumen dazwischen aufweisen und das Verfahren das Regulieren der Zwischenräume zwischen den Garnen einschließt, um einen annähernd ausgeglichenen Elastizitätsmodul zu erreichen.

16. Verfahren nach Anspruch 13, wobei die Garne eine Weglänge haben und das Verfahren das Regulieren der Krümmung von Garnen durch Ändern der Weglänge des Garns einschließt.

## Revendications

1. Structure de tissu comprenant :
un tissu ayant approximativement un module d'élasticité équilibré dans son état d'utilisation finale, comprenant des fils tissés dans deux directions, une direction étant la chaîne (50,52) et une direction étant la trame (55), ayant une plus grande quantité de fils dans une direction que dans l'autre,
**caractérisée en ce que**
au moins le fil dans une direction est étiré en une quantité modifiée pour ajuster le module d'élasticité du tissu.

2. Structure de tissu selon la revendication 1, dans laquelle le tissu comprend deux fils dissemblables, chacun tissé dans l'une des deux directions.

3. Structure de tissu selon la revendication 2, dans laquelle les fils sont tissés en une armure sergée.

4. Structure de tissu selon la revendication 3, dans laquelle les fils sont tissés avec deux fils dans une direction et un fil dans l'autre direction.

5. Structure de tissu selon la revendication 1, dans laquelle les fils sont tissés en une armure sergée.

6. Structure de tissu selon la revendication 5, dans laquelle les fils sont tissés avec deux fils dans une direction et un fil dans l'autre direction.

7. Structure de tissu selon la revendication 2, dans laquelle les fils sont tissés en une armure Oxford.

8. Structure de tissu selon la revendication 7, dans laquelle les fils sont tissés avec deux fils dans une direction et un fil dans l'autre direction.

9. Structure de tissu selon la revendication 7, dans laquelle les fils sont tissés en une armure Oxford.

10. Structure de tissu selon la revendication 9, dans laquelle les fils sont tissés avec deux fils dans une direction et un fil dans l'autre direction.

11. Structure de tissu selon la revendication 2, dans laquelle les fils sont tissés en une armure nattée.

12. Structure de tissu selon la revendication 1, dans laquelle les fils sont tissés en une armure nattée.

13. Procédé pour la fabrication d'un tissu dans lequel des fils dissemblables dans deux directions, une direction étant la chaîne (50,52) et une direction étant la trame (55), sont tissés ensemble pour équilibrer le module d'élasticité du tissu dans la direction de la chaîne et de la trame dans les conditions d'utilisation finale, dans lequel les fils dans l'armure ont une courbure (60,65), **caractérisé en ce que** le procédé comprend l'ajustement de la courbure (60,65) des fils en tissant plus de fils dans une direction que dans l'autre pour obtenir un module d'élasticité à peu près équilibré.

14. Procédé selon la revendication 13, dans lequel le procédé comprend l'étirage d'au moins l'un des fils avant de les tisser ensemble pour équilibrer le module d'élasticité du tissu dans la direction de la chaîne et dans la direction de la trame dans les conditions d'utilisation finale.

15. Procédé selon la revendication 13, dans lequel le tissu comprend des fils dans deux directions et les fils ont une pluralité d'espaces entre eux, dans lequel le procédé comprend l'ajustement des espaces entre les fils pour obtenir un module d'élasticité à peu près équilibré.

16. Procédé selon la revendication 13, dans lequel les fils ont une longueur de trajet et le procédé comprend l'ajustement de la courbure des fils en faisant varier la longueur de trajet du fil.
